# EUROPÄISCHE PATENTSCHRIFT

(11) **EP 0 758 436 B1**
(45) Veröffentlichungstag und Bekanntmachung des Hinweises auf die Patenterteilung: **26.08.1998**
(21) Anmeldenummer: 95917980.5
(22) Anmeldetag: 28.04.1995
(51) Int. Cl.: F16L 55/16, F16L 55/18

(54) **SANIERUNGSGERÄT ZUR SANIERUNG VON KANALROHREN, INSBESONDERE HAUSANSCHLUSSROHREN, UND VERFAHREN ZUM SANIEREN MIT HILFE DIESES SANIERUNGSGERÄTS**
RENOVATING DEVICE FOR PIPES, ESPECIALLY DOMESTIC CONNECTING PIPES, AND RENOVATING METHOD USING THIS DEVICE
APPAREIL PERMETTANT DE RENOVER DES CANALISATIONS, NOTAMMENT DES TUYAUX DE RACCORDEMENT DOMESTIQUES, ET PROCEDE DE RENOVATION UTILISANT UN TEL APPAREIL

(30) Priorität: 06.05.1994 DE 4415962
(43) Veröffentlichungstag der Anmeldung: 19.02.1997
(73) Patentinhaber: KANALTEC AG, 5400 Baden (CH)
(72) Erfinder: DIETRICH, Herbert, D-88074 Meckenbeuren (DE)
(74) Vertreter: Riebling, Peter, Dr.-Ing.
(86) Internationale Anmeldenummer: EP9501630
(87) Internationale Veröffentlichungsnummer: WO9530858

(56) Entgegenhaltungen:
- EP-A- 0 423 640
- EP-A- 0 465 892
- WO-A-90/05874
- WO-A-91/08417
- DE-A- 3 618 963

## Beschreibung

Die vorliegende Erfindung befasst sich mit einer Einrichtung und einem Verfahren zur Sanierung von Kanalrohren.

Besonders im Bereich, in dem die Hausanschlußrohre in das Hauptkanalrohr einmünden, bilden sich Risse und Undichtigkeiten, die saniert werden müssen.

Eine derartige Sanierung ist recht schwierig, besonders bei Kanälen, die nicht begehbar sind. Hier werden ferngesteuerte Kanalroboter eingesetzt, die mit Hilfe einer Fernsehkamera gesteuert werden.

Verschiedene Sanierungsmöglichkeiten werden in der Praxis angewendet. Zum Beispiel wird der Bereich um die Einmündung des Hausanschlußes mittels eines Roboters vom Kanalinneren her mit einer Füllmasse ausgespachtelt.

Ein anderes Verfahren verwendet kunstharzgetränkte Matten, welche an die Kanalinnenwandung angelegt werden, wobei dann durch Wärme- oder Lichteinwirkung das Kunstharz zur Aushärtung gebracht wird, und somit eine geschlossene Manschette an der Rohrinnenwand gebildet wird.

Ein anderes Verfahren unter Anwendung einer Schalung ist mit der WO 91/08417 bekannt geworden. Die Schalung wird um eine aus einem Schild herausragenden, aufblasbare Blase gelegt, und zusammen mit der Blase in das Nebenkanalrohr eingeführt. Durch Aufblasen der Blase wird die Schalung an die Nebenkanalwandung gedrückt Zwischenräume werden durch eine Spachtelmasse ausgefüllt.
Eine ähnliche Vorrichtung zeigt die EP 0 465 892 A1, bei der mittels eines aufblasbaren Dehnkörpers ein harzgetränktes Faservlies an die Innenwand eines Kanalrohres gepresst wird und dort aushärten kann.

Aus der WO 90/05874A1 ist ein Verfahren zum Reparieren einer Kanalleitung mittels eines ferngesteuerten Roboters bekannt, wobei hier gemäß Figur 7 eine aufblasbare Luftblase verwendet wird, die in das Nebenkanalrohr eingeführt und dort aufgeblasen wird. In aufgeblasenem Zustand bildet die Luftblase einen Hohlzylinder, wobei an dessen einem Ende ein Flansch angeordnet ist, der die Funktion eines Abdeckschildes übernimmt. Durch den Flansch hindurch führen Bohrungen, über welche Spachtelmasse in den Zwischenraum zwischen Flansch/ Luftblase und Kanalrohr gebracht werden kann.

Die bekannten Sanierungsverfahren sind entweder schwierig und langwierig in der Ausführung, oder sie erfordern erheblichen technischen Aufwand und Kosten, sowie das beim angesprochenen Verfahren unter Anwendung einer Schalung der Fall ist.

Von einem aus WO-A- 91/08417 bekannten Gerät ausgehend, lieg der Erfindung deshalb die Aufgabe zugrunde, ein Gerät vorzuschlagen, das ein einfaches, schnelles und kostengünstiges Sanierungsverfahren insbesondere im Bereich der Hausanschlüsse ermöglicht.

Diese Aufgabe wird erfindungsgemäß durch die Merkmale des Patentansprüche 1 und 5 gelöst.

Ein Merkmal der Erfindung ist eine dem inneren Krümmungsradius des Kanalrohres angepasste Schalungsplatte, welche an die innere Kanalwand im Bereich des Hausanschlußrohres angelegt wird. Gleichzeitig wird in den Hausanschluß eine aufblasbare Gummiblase eingeführt und aufgeblasen.
Die Bewegung und Positionierung der Schalungsplatte sowie der Blase wird durch hydraulisch oder pneumatisch betriebene Hubzylinder ausgeführt, welche unten an der Schalungsplatte angreifen.

Ist die Gummiblase im Hausanschluß aufgeblasen und liegt die Schalungsplatte fest am Inneren der Hauptrohrwandung an, wird in den Zwischenraum zwischen Kanalrohr und Schalungsplatte eine aushärtbare Füllmasse, z.B. Mörtel, Beton oder auch ein Kunststoffschaum eingedrückt, welche selbständig aushärtet.

Die Füllmasse schließt jegliche Löcher oder Risse im Bereich zwischen dem Kanalrohr und dem Hausanschlußrohr und dringt teilweise auch durch diese Risse nach außen, so daß auch vom Rohräusseren eine Abdichtung erfolgt. Durch die im Hausanschluß aufgeblasene Blase bleibt dieser Bereich frei von Füllmasse.

Der Erfindungsgegenstand der vorliegenden Erfindung ergibt sich aus dem Gegenstand der einzelnen Patentansprüche.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Dabei zeigen:
- Figur 1 bis 3:: eine schematische Darstellung des Sanierungsgeräts in seinen drei Hauptansichten,
- Figur 4:: eine vergrößerte Darstellung des Saniervorgangs.

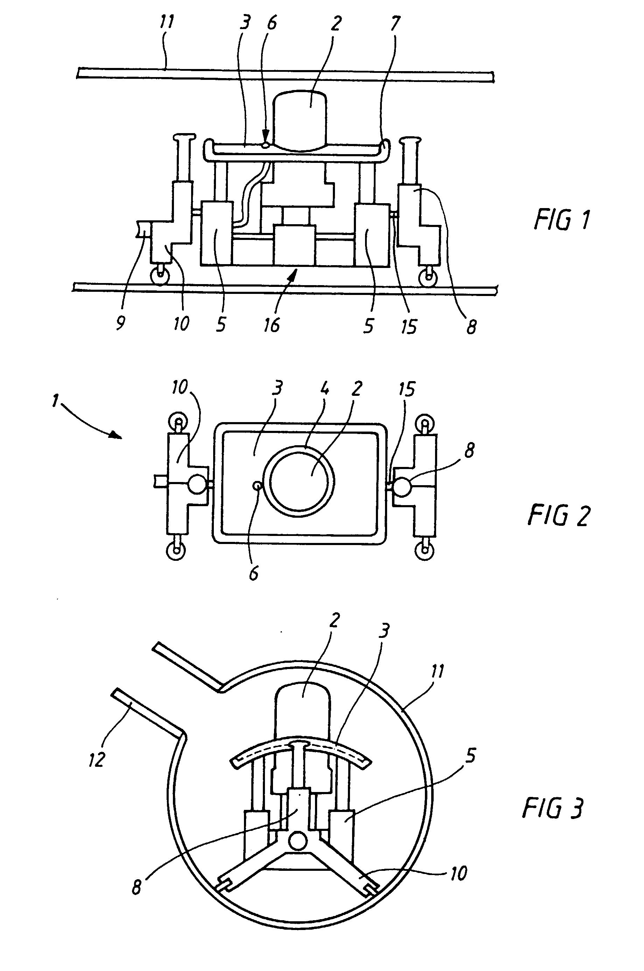

In den Figuren 1 bis 3 ist das Sanierungsgerät 1 gezeigt. Dieses wird gewöhnlich von einem Antriebswagen bewegt (nicht gezeigt), welcher auch eine Fernsehkamera trägt, um den Sanierungsvorgang steuern und beobachten zu können. In einer weiteren Ausführungsform ist vorgesehen, Antrieb und Kamera direkt auf dem Sanierungsgerät selbst vorzusehen, so daß sich ein sehr kompaktes Sanierungsgerät ergibt.

Das Sanierungsgerät 1 besitzt ein Fahrgestell 10, wobei die Räder in einem Winkel angeordnet sind, so daß sie gut am Boden des Hauptkanals 11 abrollen können und dem Gerät festen Halt geben.
Am vorderen und hinteren Fahrgestell befinden sich Stützzylinder 8, die sich in der gewünschten Sanierungsposition hydraulisch oder pneumatisch nach oben ausfahren lassen, und das Sanierungsgerät 1 fest im Kanalrohr 11 verklemmen.

Die eigentliche Saniervorrichtung 16 ist zwischen dem vorderen und hinteren Fahrgestell 10 auf einer Achse 15 gelagert, so daß die Saniervorrichtung 16 in einem Winkel von mindestens 180° bezüglich der Längsachse des Kanalrohres 11 geschwenkt werden kann.

Die Verschwenkung der Saniervorrichtung 16 um die Achse 15 erfolgt über einen Getriebemotor, einen Kettenantrieb oder ähnliches.

Die Schalungsplatte 3 , die in ihrer Krümmung dem Innenradius des Kanalrohres 11 angepasst ist, wird durch hydraulisch oder pneumatisch betriebene Hubzylinder 5 getragen, welche jeweils an einer Ecke der Schalungsplatte 3 angreifen.
Die Blase 2 ist durch eine Durchführung 4 in der Schalungsplatte 3 durchgeführt, und wird nun in den Hausanschluß 12 eingeführt. Durch die drehbare Lagerung der Sanierungsvorrichtung 16 ist dieses leicht zu erreichen, auch wenn der Hausanschluß 12 schräg in das Hauptrohr 11 einmündet.

Mit dem Einführen der Blase 2 in den Hausanschluß 12 wird gleichzeitig die Schalungsplatte 3 mittels der Hubzylinder 5 fest an das Innere des Kanalrohres 11 gepresst und danach die Blase aufgeblasen.

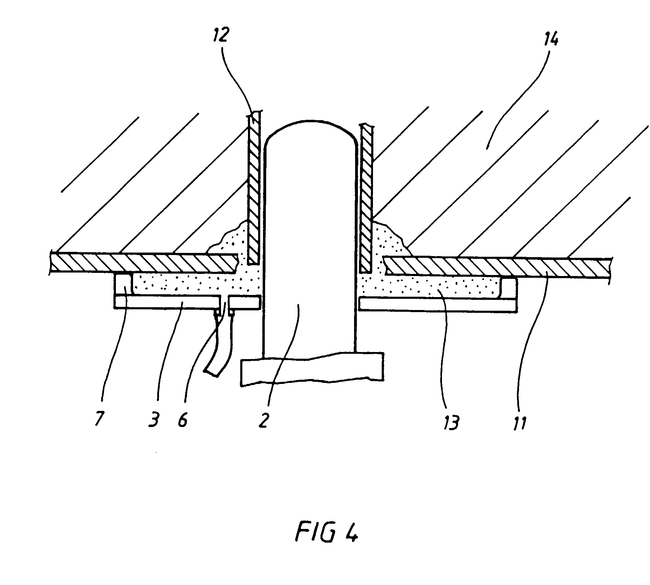

Wie in Figur 4 zu erkennen, liegt nun der Gummiwulst 7 der Schalungsplatte 3 dicht am Kanalrohr 11 an, wobei die aufgeblasene Blase 2 den Stutzen des Hausanschlußes 12 ausfüllt. Nun wird ein Füllstoff 13 über einen an der Schalungsplatte 3 angeordneten Füllstoffaustritt 6 in den verbleibenden Zwischenraum zwischen Schalungsplatte 3 und Hauptrohr 11 gepresst und gelangt teilweise über Risse und Beschädigungen der Rohre 11,12 auch auf die Aussenseite der Rohrwandungen, wo sich Erdreich 14 befindet. Nach kurzer Zeit ist der Füllstoff 13 ausgehärtet, und die Blase 2 kann in ihre Normalgröße zurückgebracht werden und die Schalungsplatte 3 abgenommen werden.

Es bleibt ein sauber sanierter Hausanschluß 12, was erfindungsgemäss mit geringem Aufwand und niederen Kosten erreicht werden kann.
Die Größe der Blase 2, sowie der Radius der Schalungsplatte 3 müssen natürlich an den Durchmesser des Hauptkanals 11 und den Hausanschluß 12 angepasst werden. Deshalb ist eine leichte Austauschbarkeit der gesamten Sanierungsvorrichtung 16 vorgesehen. Es wird dabei die gesamte Einheit mit wenigen Handgriffen ausgetauscht, wobei das Fahrgestell prinzipiell immer verwendet werden kann.

Die notwendigen elektrischen, hydraulischen oder pneumatischen Anschlüsse 9, sowie der Anschluß zur Zufuhr der Füllmasse, befinden sich vorzugsweise am Fahrgestell 10 des Sanierungsgeräts 1.

Nach einem Sanierungseinsatz wird der Zufuhrschlauch für den Füllstoff vorzugsweise innerhalb des Kanalrohres 11 mit Wasser durchspült und gereinigt, wobei auch gleichzeitig die Schalungsplatte 3 gesäubert wird, so daß das Sanierungsgerät 1 sofort wieder einsatzfähig ist.

## Patentansprüche

1. Sanierungsgerät mit einem Fahrgestell (10), zur Sanierung von Kanalrohren, insbesondere Hausanschlußrohren, wobei eine Saniervorrichtung (16) vorhanden ist, die im wesentlichen aus einer Schalungsplatte (3) und einer unter Druck aufblasbaren Blase (2) besteht, **dadurch gekennzeichnet**, daß die Schalungsplatte (3) durch vier hydraulisch oder pneumatisch betriebene Hebezylinder (5) heb- und senkbar ist und einen umlaufenden Wulst (7) aus weichem Kunststoff oder Gummimaterial besitzt, so daß beim Anlegen der Schalungsplatte ein Zwischenraum zwischen Schalungsplatte und Innenwand des Kanalrohrs (11) gebildet wird, daß die Blase (2) durch eine Durchführung (4) in der Schalungsplatte (3) geführt ist, und in der Schalungsplatte (3) ein Füllstoffauslaß (6) vorgesehen ist, welcher seitlich neben der Blase (2) im Zwischenraum zwischen der angelegten Schalungsplatte (3) und der Innenwand des Kanalrohres (11) austritt.

2. Sanierungsgerät nach Anspruch 1, **dadurch gekennzeichnet**, daß die Saniervorrichtung (16) über eine parallel zur Längsrichtung des Kanalrohres (11) verlaufende Achse (15) am Fahrgestell (10) drehbar gelagert ist.

3. Sanierungsgerät nach einem der Ansprüche 1 oder 2,
**dadurch gekennzeichnet**, daß die gesamte Sanierungsvorrichtung (16) austauschbar ist.

4. Sanierungsgerät nach einem der Ansprüche 1 bis 3,
**dadurch gekennzeichnet**, daß das Sanierungsgerät (1) mit dem Fahrgestell (10) verbundene, hydraulisch oder pneumatisch betriebene Stützzylinder (8) aufweist.

5. Verfahren zum Sanieren von Kanalrohren mit Hilfe der Vorrichtung nach den Ansprüchen 1 bis 4, **dadurch gekennzeichnet**, daß das Sanierungsgerät (1) bis unter den zu sanierenden Hausanschluß (12) gefahren wird und mittels den Stützzylindern (8) im Kanalrohr (11) verankert wird, wobei die Schalungsplatte (3) zusammen mit der Blase (2) mittels der Hubzylinder (5) angehoben wird, und die Blase in das Hausanschlußrohr (12) eingefahren wird, bis die Schalungsplatte (3) fest an der Innenwand des Kanalrohrs (11) anliegt, wobei die Blase (2) aufgeblasen wird und ein Füllstoff (13) in den durch die Schalungsplatte (3) und das Kanalrohr (11) gebildeten Zwischenraum eingebracht wird.

## Claims

1. Repair apparatus with a chassis (10) for the repair of drainage pipes, in particular domestic connecting pipes, wherein a repair device (16) is present, which consists substantially of a shuttering plate (3) and a bladder (2), inflatable under pressure, characterised in that the shuttering plate (3) is able to be raised and lowered by four lifting cylinders (5) which are operated hydraulically or pneumatically, and has a circumambient bulge (7) of soft plastic or rubber material, so that on placement of the shuttering plate an intermediate space is formed between the shuttering plate and the inner wall of the drainage pipe (11), that the bladder (2) is guided through a passage (4) in the shuttering plate (3), and a filler outlet (6) is provided in the shuttering plate (3), which outlet (6) emerges laterally adjacent to the bladder (2) in the intermediate space between the applied shuttering plate (3) and the inner wall of the drainage pipe (11).

2. Repair apparatus according to Claim 1, characterised in that the repair device (16) is rotatably mounted on the chassis (10) by means of an axis (15) running parallel to the longitudinal direction of the drainage pipe (11).

3. Repair apparatus according to one of Claims 1 or 2, characterised in that the entire repair device (16) is exchangeable.

4. Repair apparatus according to one of Claims 1 to 31, characterised in that the repair apparatus (1) has hydraulically or pneumatically operated support cylinders (8) connected with the chassis (10).

5. A method for repairing drainage pipes by means of the device according to Claims 1 to 4, characterised in that the repair apparatus (1) is moved to beneath the domestic connection (12) which is to be repaired and is anchored by means of the support cylinders (8) in the drainage pipe (11), wherein the shuttering plate (3) together with the bladder (2) is raised by means of the lifting cylinder (5), and the bladder is introduced into the domestic connecting pipe (12) until the shuttering plate (3) lies firmly against the inner wall of the drainage pipe (11), with the bladder (2) being inflated and a filler (13) being introduced into the intermediate space formed by the shuttering plate (3) and the drainage pipe (11).

## Revendications

1. Appareil de rénovation pourvu d'un chariot (10), pour rénover des canalisations, en particulier des tuyaux de raccordement domestiques, étant précisé qu'il est prévu un dispositif de rénovation (16) qui se compose essentiellement d'un panneau de coffrage (3) et d'une vessie (2) gonflable sous pression, **caractérisé** en ce que le panneau de coffrage (3) est apte à être soulevé et abaissé par quatre cylindres de levage (5) à commande hydraulique ou pneumatique et présente un renflement circulaire (7) en matière plastique ou en matériau caoutchouteux souple, de sorte que lors de l'application du panneau de coffrage, il se forme un espace intermédiaire entre le panneau de coffrage et la paroi intérieure de la canalisation (11), et en ce que la vessie (2) est introduite par un passage (4) dans le panneau de coffrage (3) et il est prévu dans celui-ci un orifice de sortie de masse de remplissage (6) qui débouche près de la vessie, latéralement, dans l'espace intermédiaire entre le panneau de coffrage (3) appliqué et la paroi intérieure de la canalisation (11).

2. Appareil de rénovation selon la revendication 1, **caractérisé** en ce que le dispositif de rénovation (16) est monté en rotation sur le chariot (10) grâce à un axe (15) parallèle au sens longitudinal de la canalisation (11).

3. Appareil de rénovation selon la revendication 1 ou 2, **caractérisé** en ce que l'ensemble du dispositif de rénovation (16) peut être changé.

4. Appareil de rénovation selon l'une des revendications 1 à 3, **caractérisé** en ce que l'appareil de rénovation (1) comporte des cylindres d'appui (8) reliés au chariot (10) et commandés par voie hydraulique ou pneumatique.

5. Procédé pour rénover des canalisations à l'aide du dispositif selon les revendications 1 à 4, **caractérisé** en ce que l'appareil de rénovation (1) est amené sous le raccordement domestique à rénover (12) et est ancré dans la canalisation (11) à l'aide des cylindres d'appui (8), le panneau de coffrage (3) étant soulevé avec la vessie (2) à l'aide des cylindres de levage (5) et la vessie étant insérée dans la canalisation de raccordement domestique (12) jusqu'à ce que le panneau de coffrage (3) soit appliqué fermement contre la paroi intérieure de la canalisation (11), moyennant quoi la vessie (2) est gonflée et une masse de remplissage (13) est introduite dans l'espace intermédiaire défini par le panneau de coffrage (3) et la canalisation (11).
